# EUROPEAN PATENT APPLICATION

(11) **EP 2 323 344 A1**
(43) Date of publication of application: **18.05.2011**
(21) Application number: 09809220.8
(22) Date of filing: 21.08.2009
(51) Int. Cl.: H04L 29/08

(54) **METHOD FOR PREVENTING THREAD HANGING IN A MULTI-THREAD COMMUNICATION PROGRAM**

(30) Priority: 01.09.2008 CN 200810119263
(71) Applicant: ZTE Corporation, Shenzhen, Guangdong 518057 (CN)
(72) Inventor: LI, Bing, Shenzhen Guangdong 518057 (CN)
(74) Representative: Hogeweg, Albertus Johan
(86) International application number: PCT/CN2009/073424
(87) International publication number: WO 2010/022635

(57) **Abstract**

A method for preventing thread hanging in a multi-thread communication program is provided by the invention. The method includes that: when a first sub-thread detects that an abnormality occurs to a first TCP connection corresponding to the present sub-thread, setting an exit flag bit in the link information of the first TCP connection, and exiting the present sub-thread; and the master control thread periodically polling the link information table, in which when detecting the exit flag bit in the link information of the first TCP connection, the master control thread closes the first TCP connection, kills all the remaining sub-threads corresponding to the first TCP connection, and clears the link information of the first TCP connection. According to the method, the thread hanging is prevented from happening in the communication program, assuring the normal running of the communication program.

## Description

### Field of the Invention

The present invention relates to the field of multi-thread control technology, in particular to a method for preventing thread hanging in a multi-thread communication program.

### Background of the Invention

With the development of intelligent network, a communication program of the intelligent network needs to link more nodes increasingly, and the data quantity of communication is also increasing gradually, which imposes a higher requirement on the efficiency of the communication program accordingly. Most intelligent network communication programs currently used employ a multi-thread architecture, i.e., in the program there is one master control thread for processing a link establishing (TCP connection establishing) request or initiating link establishment request. The master control thread establishes a pair of sub-threads for the node on each TCP link, i.e., one for receiving sub-thread and the other for transmitting sub-thread, the two respectively used to receive and transmit messages on the TCP link. The master control thread also records the information, such as node module number, office number, IP address, the thread IDs (identifiers) for the transmitting sub-thread and the receiving sub-thread, etc., into a global link information table.

When a new link is established or link interruption occurs, the communication program needs to newly establish the transmitting sub-thread and the receiving sub-thread or close the transmitting sub-thread and the receiving sub-thread, and accordingly, to update the corresponding information in the link information table. Because any one of the communication master control thread, the receiving sub-thread or the transmitting sub-thread may update the link information table, a mutual exclusion lock may be employed to guarantee that only one thread operates the link information table at a same time. Because the communication master control thread, the receiving sub-thread, and the transmitting sub-thread run simultaneously, when discovering link abnormality, the receiving sub-thread or the transmitting sub-thread will update the link information table after obtaining the mutual exclusion lock. At the same time, the master control thread detects the link abnormality because it has not received heart-beat information, and herein the master control thread will close the link and recover the thread resource corresponding to the link, which generally kills the thread. If the receiving sub-thread or the transmitting sub-thread are killed by the master control thread under the circumstance that the mutual exclusion lock has been obtained, the mutual exclusion lock is made unavailable, and the master control thread will get into an endless waiting state when trying to obtain the mutual exclusion lock for the next time, thus the thread is hung.

It can be seen that, in the prior art, when the multi-thread mode is used for inter-device communication in the intelligent network, communication thread hanging may occur when the master control thread closes the thread corresponding to the link.

### Summery of the Invention

The present invention aims at providing a method for preventing thread hanging in a multi-thread communication program, so as to prevent the thread in a communication program from hanging and to ensure that the communication program runs normally.

To solve the above problem, the present invention employs the following scheme:

According to one aspect of the present invention, there is provided a method for preventing thread hanging in a multi-thread communication program.

The method for preventing thread hanging in a multi-thread communication program according to the present invention comprises:
a master control thread for initiating a link establishment request and/or treating a link establishment request;
at least one pair of sub-threads, wherein each pair of sub-thread is corresponding to one TCP connection, and comprises a receiving sub-thread for receiving messages and a transmitting sub-thread for transmitting messages on the TCP connection; and
a link information table for storing link information of each TCP connection,
the method comprises:
when a first sub-thread detects that an abnormality occurs to a first TCP connection corresponding to the present sub-thread, setting an exit flag bit in the link information of the first TCP connection, and exiting the present sub-thread; and
the master control thread periodically polling the link information table, in which when detecting the exit flag bit in the link information of the first TCP connection, the master control thread closes the first TCP connection, kills all the remaining sub-threads corresponding to the first TCP connection, and clears the link information of the first TCP connection.

Preferably, in the above method, the first sub-thread further detects whether an abnormality occurs to the first TCP connection according to whether a transmitting error or a receiving error happens to the first TCP connection.

Preferably, in the above method, when failing to exit, the first sub-thread further enters sleeping state and sets, in the link information of the first TCP connection, a state information indicating that the first sub-thread is in the sleeping state; and
the master control thread kills the first sub-thread in the sleeping state after detecting the state information.

Preferably, in the above method, the master control thread further closes the first TCP connection through closing a socket descriptor of the first TCP connection.

Preferably, in the above method, the master control thread further kills all the remaining sub-threads corresponding to the first TCP connection according to sub-thread IDs stored in the link information of the first TCP connection.

According to another aspect of the present invention, there is provided a method for preventing thread hanging in a multi-thread communication program.

The method for preventing thread hanging in a multi-thread communication program comprises:
a master control thread for initiating a link establishment request and/or treating a link establishment request;
at least one pair of sub-threads, wherein each pair of sub-threads is corresponding to one TCP connection and comprises a receiving sub-thread for receiving messages and a transmitting sub-thread for transmitting messages on the TCP connection; and
a link information table for storing link information of each TCP connection,
the method comprises:
   the master control thread closing the first TCP connection when detecting that an abnormality occurs to a first TCP;
   when a sub-thread corresponding to the first TCP connection detects that an abnormality occurs to the first TCP connection, setting an exit flag bit in the link information of the first TCP connection, and exiting the present sub-thread;
   the master control thread periodically polling the link information table, wherein when detecting the exit flag bit in the link information of the first TCP connection, the master control thread kills all the remaining sub-threads corresponding to the first TCP connection, and clears the link information of the first TCP connection.

Preferably, in the above method, the sub-thread corresponding to the first TCP connection further detects whether an abnormality occurs to the first TCP connection according to whether a transmitting error or a receiving error happens to the first TCP connection.

Preferably, in the above method, when failing to exit, the sub-thread corresponding to the first TCP further enters sleeping state and sets, in the link information of the first TCP connection, a state information indicating that the present sub-thread is in the sleeping state; and
the master control thread kills the sub-thread in the sleeping state after detecting the state information.

Preferably, in the above method, the master control thread further closes the first TCP connection through closing a socket descriptor of the first TCP connection.

Preferably, in the above method, the master control thread further kills all the remaining sub-threads corresponding to the first TCP connection according to sub-thread IDs stored in the link information of the first TCP connection.

As described above, in virtue of the method for preventing thread hanging in a multi-thread communication program provided by the present invention, when a connection abnormality is detected by a communication sub-thread, through setting an exit flag bit to indicate the abnormality, wherein the receiving sub-thread and the transmitting sub-thread may respectively sets an exit flag bit, the master control thread kills the corresponding sub-thread according to the exit flag bit, so as to ensure that the master control thread, receiving/transmitting sub-thread will not perform operation on a same content in the link information table simultaneously, that is to say, the embodiment avoids the use of mutual exclusion lock through employing a particular flag bit and flow, such that thread hanging resulted from the mutual exclusion lock being unavailable can be fundamentally avoided, therefore it is guaranteed that the communication program runs properly. Moreover, in the present invention, after detecting that an abnormality occurs to a TCP connection, the master control thread does not directly kill the receiving/transmitting sub-thread corresponding to the TCP connection, but rather closes the TCP connection first, and waits for that the receiving/transmitting sub-thread of the TCP connection actively exits, it kills the receiving/transmitting sub-thread only when the receiving/transmitting sub-thread fails to exit. Thus it is avoided to directly kill these sub-threads, which may result in an unexpected effect on the communication program due to data receiving and transmitting failure. At last, the present invention can be implemented with C language and has a good transplantability.

Other features and advantages of the present invention will be described in the following description and partly become obvious from the description, or be understood by implementing the present invention. The objects and other advantages of the present invention can be realized and obtained through the structures indicated by the description, claims and drawings.

### Brief Description of the Drawings

Drawings, provided for further understanding of the present invention and forming a part of the specification, are used to explain the present invention together with embodiments of the present invention rather than to limit the present invention, wherein,
Fig.1 is a structure diagram of the intelligent network multi-SCP system to which the embodiment of the present invention may be applied;
Fig.2 is a system architecture diagram of the embodiment of the present invention;
Fig.3 is a flow chart of the method for preventing thread hanging of the embodiment of the present invention; and
Fig.4 is a flow chart of the method for preventing thread hanging of another embodiment of the present invention.

### Detailed Description of the Embodiments

### Functionality Overview

According to the method provided by the embodiment of the present invention, when an abnormality occurs to a link, through a particular treatment sequence and treatment manner, it is realized that the master control thread, receiving/transmitting sub-thread will not update a same information in the link information table at the same time, thus each thread can update the link information table without obtaining the mutual exclusion lock, so as to avoid thread hanging in the communication program, and ensure the service to run properly. The present invention will be detailed in connection with embodiments and drawings.

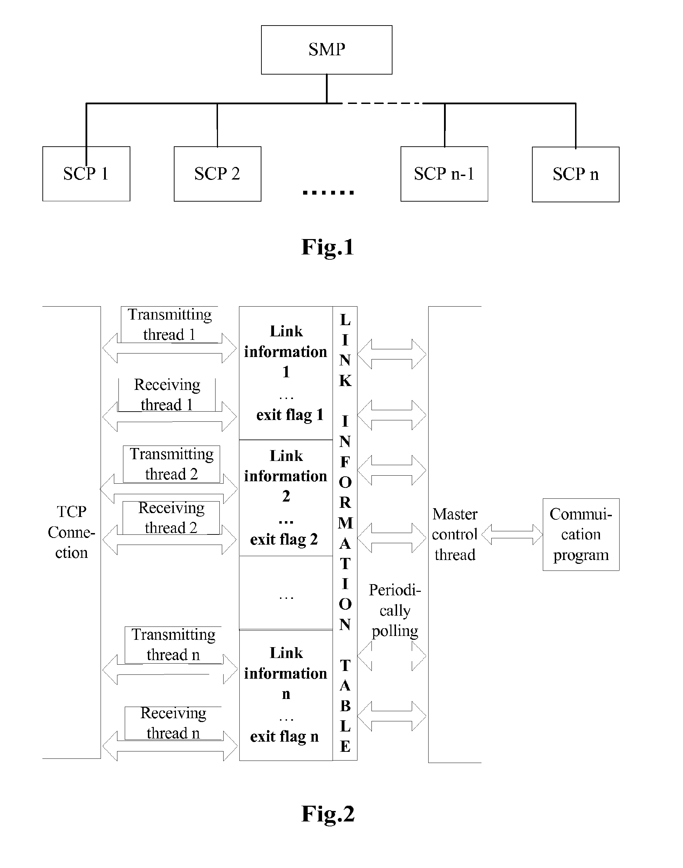

In the following embodiments, an intelligent network multi-SCP system is taken as an example for illustration. As shown in Fig.1, such a system has multiple SCPs (service control points), there are services running on each SCP, and each SCP has its own service. The multiple SCPs are managed by one SMP (service management point). TCP long connections are established between SCPs, and between an SCP and an SMP.

Fig.2 is a system architecture diagram of the embodiment of the present invention. As shown in Fig.2, when being started, the communication programs on the SCP and SMP will create a master control thread for initiating link establishment request and/or for treating link establishment request, then establish TCP long connections with other SCPs and/or the SMP, and create a pair of sub-threads (i.e., the transmitting sub-thread and the receiving sub-thread) corresponding to each established connection, so as to perform message transmitting and receiving respectively. Moreover, a global link information table is created and the link information of each TCP connection is recorded in the link information table.

When an abnormality occurs to the TCP connection, it is possible for both of the communication sub-thread (including receiving/transmitting sub-thread) and the master control thread to detect the abnormality occurred to the TCP connection, and the two situations are described in the following.

### 1, the communication sub-thread detects the TCP connection abnormality.

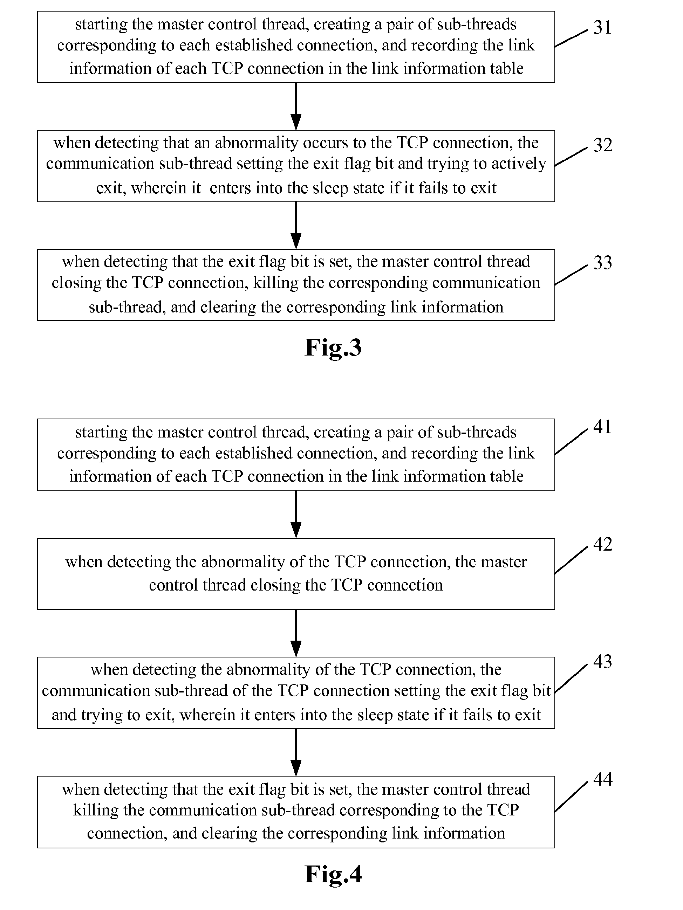

As shown in Fig.3, the method for preventing thread hanging in a multi-thread communication program of the embodiment comprises the following steps.

Step 31, the communication program starts the master control thread and establishes TCP long connections with other SCPs and/or the SMP, creates a pair of sub-threads corresponding to each established connection, and records the link information of each TCP connection in the link information table.

Step 32, when error occurs to the message received or transmitted by a communication sub-thread on a certain TCP connection corresponding to the communication sub-thread (for the purpose of description, it is referred to as the first TCP connection), it is determined that an abnormality occurs to the first TCP connection. The communication sub-thread sets the exit flag bit (EXITFALG) in the link information of the first TCP connection to indicate whether the receiving/transmitting sub-thread corresponding to the first TCP connection shall exit due to the abnormality; furthermore, the communication sub-thread tries to actively exit, and enters into sleep state if it fails to exit. Herein, the communication sub-thread may be the receiving sub-thread or the transmitting sub-thread corresponding to the first TCP connection.

Step 33, after being started, the master control thread begins to periodically poll the link information table, and determine whether the EXITFLAG (exit flag) bit in the link information of each TCP connection in the link information table has been set. Because the EXITFLAG bit in the link information of the first TCP connection in the link information table has been set, the master control thread will detect that the EXITFLAG bit has been set when polling the first TCP connection, and at this point, the master control thread closes the socket descriptor of the first TCP connection so as to close the first TCP connection, kills the communication sub-thread corresponding to the first TCP connection according to the thread ID of the communication sub-thread corresponding to the first TCP connection stored in the link information of the first TCP connection, updates the link information table, and clears the link information corresponding to the first TCP connection. Herein, because a certain communication sub-thread corresponding to the first TCP connection may have actively and successfully exited, at this time, the master control thread only needs to kill all the remaining sub-threads corresponding to the first TCP connection. Thereafter, the master control thread continues to poll the next TCP connection and performs the similar determination.

In above step 32, when the communication sub-thread enters the sleep state after failing to exit, state information indicating that the sub-thread is in the sleep state can be further set in the link information, such that in step 33, after detecting the state information, the master control thread can kill the communication sub-thread in the sleep state according to that.

It can be seen from the above description that, in the embodiment, when detecting the connection abnormality, the communication thread indicates the abnormality by setting the exit flag bit, wherein the receiving sub-thread and the transmitting sub-thread may respectively set the exit flag bit. The master control thread kills the corresponding sub-thread according to the exit flag bit to ensure that the master control thread and the receiving/transmitting sub-thread will not manipulate the same content in the link information table at the same time, that is to say, the embodiment avoids the use of mutual exclusion lock by the particular flag and flow, so as to thoroughly prevent the thread hanging resulted from the mutual exclusion being unavailable, and ensure that the communication program runs properly.

### 2, the master control thread detects the TCP connection abnormal.

As shown in Fig.4, the method for preventing thread hanging in a multi-thread communication program comprises the following steps.

Step 41, the communication program starts the master control thread and establishes TCP long connections with other SCPs and/or the SMP, creates a pair of sub-threads corresponding to each established connection, and records the link information of each TCP connection in the link information table.

Step 42, after being started, the master control thread periodically detects whether the heartbeat message of each TCP connection is normal, i.e., whether the heartbeat message of the opposite end of the TCP connection is received, wherein if the heartbeat message has not been received from the opposite end in a specified period of time (e.g., 20 seconds), then it is considered that the TCP connection is abnormal, at this time, the master control thread closes the TCP connection by closing the socket descriptor of the TCP connection (herein, it is assumed that the TCP connection is the first TCP connection).

Step 43, because the first TCP connection is closed, a receiving or transmitting error occurs to the communication sub-thread of the first TCP connection wherein after detecting the above error, the communication sub-thread sets an EXITFLAG bit in the link information corresponding to the first TCP connection, and tries to actively exit, wherein it enters the sleep state if it fails to exit.

Step 44, after being started, the master control thread begins to periodically poll the link information table, and determine whether the EXITFLAG bit in the link information of each TCP connection in the link information table is set wherein because the EXITFLAG bit in the link information of the first TCP connection in the link information table has been set, the master control thread will detect that the EXITFLAG bit has been set when polling the first TCP connection, at this point, the master control thread kills the communication sub-thread corresponding to the first TCP connection according to the thread ID of the communication sub-thread corresponding to the first TCP connection stored in the link information of the first TCP connection, and after the recovering of the thread resource (e.g., stack and so on) is completed, the master control thread updates the link information table and clears the link information corresponding to the first TCP connection. Herein, because a certain communication sub-thread corresponding to the first TCP connection may have actively and successfully exited, at this time, the master control thread only needs to kill all the remaining sub-threads corresponding to the first TCP connection. Thereafter, the master control thread continues to poll the next TCP connection and performs the similar determination.

In the embodiment, after detecting that an abnormality occurs to the first TCP connection, the master control thread does not kill the communication sub-threads corresponding to the first TCP connection directly, but firstly closes the first TCP connection and waits for the active exiting of the communication sub-threads of the first TCP connection, and if the communication sub-thread fails to exit, the master control thread kills the communication sub-thread, which has the purposes lying in: when an abnormality occurs to the first TCP connection, it is possible that the receiving/transmitting sub-thread thereof is still receiving or transmitting data, in which if killing the sub-thread directly, it may result in the failure of data receiving or transmitting and bring about unexpected effects on the communication program, thus in the embodiment, the sub-thread is made to actively exit to prevent the above case from happening.

To sum up, by setting the exit flag bit and employing a particular flow, the embodiment of the present invention effectively prevents the thread in the communication program from hanging, so as to avoid a long time communication interruption between the SCP and SMP.

In the embodiment of the present invention, the communication program between the SCP and SMP is taken as an exemplary implementation, however, the present invention is not limited thereof. Those skilled in the art shall appreciate that some obvious variation can be made to the form and detail of the embodiment without departing from the scope and spirit of the present invention. Therefore, the embodiment given above is intended to be illustrative rather than restrictive, and all the changes and modifications without departing from the scope and spirit of the present invention are all included in the scope of the present invention.

## Claims

1. A method for preventing thread hanging in a multi-thread communication program, with the communication program comprising:
a master control thread for initiating a link establishment request and/or treating a link establishment request;
at least one pair of sub-threads, wherein each pair of sub-thread is corresponding to one TCP connection, and comprises a receiving sub-thread for receiving messages and a transmitting sub-thread for transmitting messages on the TCP connection; and
a link information table for storing link information of each TCP connection,
**characterized in that** the method comprises:
when a first sub-thread detects that an abnormality occurs to a first TCP connection corresponding to the present sub-thread, setting an exit flag bit in the link information of the first TCP connection, and exiting the present sub-thread; and
the master control thread periodically polling the link information table, in which when detecting the exit flag bit in the link information of the first TCP connection, the master control thread closes the first TCP connection, kills all the remaining sub-threads corresponding to the first TCP connection, and clears the link information of the first TCP connection.

2. The method according to Claim 1, **characterized in that**, the first sub-thread further detects whether an abnormality occurs to the first TCP connection according to whether a transmitting error or a receiving error happens to the first TCP connection.

3. The method according to Claim 1, **characterized in that**,
when failing to exit, the first sub-thread further enters sleeping state and sets, in the link information of the first TCP connection, a state information indicating that the first sub-thread is in the sleeping state; and
the master control thread kills the first sub-thread in the sleeping state after detecting the state information.

4. The method according to Claim 1, **characterized in that**, the master control thread further closes the first TCP connection through closing a socket descriptor of the first TCP connection.

5. The method according to Claim 1, **characterized in that**, the master control thread further kills all the remaining sub-threads corresponding to the first TCP connection according to sub-thread IDs stored in the link information of the first TCP connection.

6. A method for preventing thread hanging in a multi-thread communication program, with the communication program comprising:
a master control thread for initiating a link establishment request and/or treating a link establishment request;
at least one pair of sub-threads, wherein each pair of sub-threads is corresponding to one TCP connection and comprises a receiving sub-thread for receiving messages and a transmitting sub-thread for transmitting messages on the TCP connection; and
a link information table for storing link information of each TCP connection,
**characterized in that** the method comprises:
the master control thread closing the first TCP connection when detecting that an abnormality occurs to a first TCP;
when a sub-thread corresponding to the first TCP connection detects that an abnormality occurs to the first TCP connection, setting an exit flag bit in the link information of the first TCP connection, and exiting the present sub-thread;
the master control thread periodically polling the link information table, wherein when detecting the exit flag bit in the link information of the first TCP connection, the master control thread kills all the remaining sub-threads corresponding to the first TCP connection, and clears the link information of the first TCP connection.

7. The method according to Claim 6, **characterized in that** the sub-thread corresponding to the first TCP connection further detects whether an abnormality occurs to the first TCP connection according to whether a transmitting error or a receiving error happens to the first TCP connection.

8. The method according to Claim 6, **characterized in that**,
when failing to exit, the sub-thread corresponding to the first TCP further enters sleeping state and sets, in the link information of the first TCP connection, a state information indicating that the present sub-thread is in the sleeping state; and
the master control thread kills the sub-thread in the sleeping state after detecting the state information.

9. The method according to Claim 6, **characterized in that**, the master control thread further closes the first TCP connection through closing a socket descriptor of the first TCP connection.

10. The method according to Claim 6, **characterized in that**, the master control thread further kills all the remaining sub-threads corresponding to the first TCP connection according to sub-thread IDs stored in the link information of the first TCP connection.
